# FASCICULE DE BREVET EUROPEEN

(11) **EP 0 777 941 B1**
(45) Date de publication et mention de la délivrance du brevet: **02.05.2003**
(21) Numéro de dépôt: 95929142.8
(22) Date de dépôt: 28.08.1995
(51) Int. Cl.: H04L 12/403

(54) **RESEAU LOCAL INDUSTRIEL OU DOMESTIQUE**
HÄUSLICHES ODER INDUSTRIELLES LOKALES NETZWERK
LOCAL, INDUSTRIAL OR DOMESTIC NETWORK

(30) Priorité: 31.08.1994 FR 9410632
(43) Date de publication de la demande: 11.06.1997
(73) Titulaire: Gandar, Marc, 1212 Grand-Lancy (CH)
(72) Inventeur: Gandar, Marc, 1212 Grand-Lancy (CH)
(74) Mandataire: de Beaumont, Michel
(86) Numéro de dépôt international: FR9501127
(87) Numéro de publication internationale: WO96007259

(56) Documents cités:
- EP-A- 0 192 305
- CONTROL ENGINEERING, Septembre 1991 pages 65-67, J.P.THOMESSE,P.LORENZ,J.P.BARDINET,P.LETER RIER,T.VALENTIN 'Factory Instrumentation Protocol: Model, Products, and Tools.'

## Description

La présente invention concerne un réseau local de type industriel ou domestique, destiné à la commande et/ou au contrôle de divers appareils grâce à un ou plusieurs ordinateurs distribués (ou délocalisés).

Le bus I2C est un exemple de tel réseau. Le bus I2C est peu onéreux, mais sa longueur est limitée à quelques mètres et ne permet de commander qu'un nombre limité d'appareils. En outre, le débit d'information sur ce bus est particulièrement faible (100 kbits/s), ce qui limite son utilisation à des transferts de commandes simples, du type marche/arrêt, ou de variables numériques qui évoluent lentement. Le transfert de commandes consomme une partie non négligeable de la puissance de calcul de l'ordinateur qui gère le réseau.

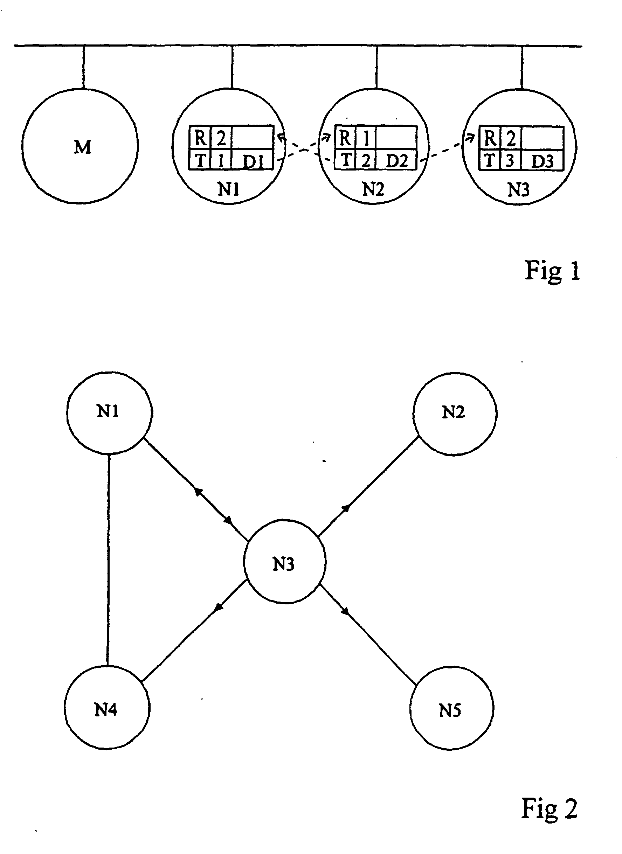

La figure 1 représente un exemple de réseau FIP, qui est un réseau plus performant que le bus I2C. Ce réseau (voir aussi le document "Control Engineering, Septembre 1991, pages 65-67, J.P. Tnomesse, P. Lorenz, J.P. Bardinet, P. Leter Rier, T. Valentin : "Factory Instrumentation Protocol : Model, Products and Tools"") comprend un ensemble de circuits, ou noeuds, M et N1 à N3 reliés à un bus commun. Le circuit M est un circuit maître qui gère les échanges d'informations entre les noeuds N1 à N3. Les échanges se font par un mécanisme dit des "abonnés". Chaque noeud N comprend au moins un abonné consommateur (récepteur) R et au moins un abonné producteur (émetteur) T. Chaque abonné producteur a une adresse unique. Chaque abonné consommateur est destiné à recevoir les informations émises par un seul abonné producteur que l'utilisateur associe à l'abonné consommateur par une programmation des noeuds.

Dans l'exemple de la figure 1, les noeuds N1 à N3 comprennent des abonnés producteurs T d'adresses respectives 1 à 3. Les abonnés consommateurs des noeuds N1 à N3 sont respectivement associés aux abonnés producteurs d'adresses respectives 2, 1 et 2. On établit ainsi des liaisons logiques, représentées en pointillés, unidirectionnelles ou bidirectionnelles entre les divers noeuds du réseau.

Les abonnés producteurs T sont interrogés à tour de rôle par le circuit maître M, cette interrogation consistant, par exemple, en l'émission par le circuit maître des adresses de ces abonnés producteurs. A chaque interrogation, l'abonné producteur correspondant reconnaît son adresse et émet son contenu tandis que les abonnés consommateurs associés reconnaissent également l'adresse et se préparent à recevoir ce contenu.

Un réseau FIP est particulièrement sûr en ce qu'un abonné consommateur ne reçoit d'informations que de l'abonné producteur associé et ne peut donc recevoir de commandes intempestives provenant d'un noeud connecté au réseau par erreur ou par malveillance.

Toutefois, un inconvénient d'un réseau FTP est qu'il devient inutilisable lorsque le bus est accidentellement coupé.

La figure 2 illustre une technique, dite "d'inondation", permettant à un réseau d'être utilisable même si des liaisons entre noeuds sont coupées. Des noeuds N1 à N5 de ce réseau sont reliés entre eux par des liaisons point à point. Chaque noeud a la possibilité d'être connecté à plusieurs autres noeuds par des liaisons point à point, toutes les possibilités n'étant pas nécessairement utilisées. Ainsi, par exemple, le noeud N3 est relié aux noeuds N1, N2, N4 et N5 ; le noeud N1 étant relié aussi au noeud N4. Chaque noeud est prévu pour répéter sur toutes ses liaisons point à point une information qu'il reçoit pour la première fois sur l'une des liaisons, ce qui est représenté par une flèche allant du noeud N1 vers le noeud N3 et par quatre flèches sortant du noeud N3. On assure ainsi que chaque noeud du réseau reçoit au moins une fois chaque information. Un noeud peut même recevoir une même information plusieurs fois. Par exemple, le noeud N1 émet une information qui arrive sur les noeuds N3 et N4 simultanément. Peu de temps après, le noeud N3 répète cette information qui est de nouveau reçue par le noeud N4. Les noeuds de ce réseau sont donc prévus pour tenir compte d'une information (la répéter et le cas échéant, la traiter) seulement la première fois qu'elle arrive.

Ainsi, chaque noeud peut recevoir plusieurs fois une même information par des chemins différents. Si l'un des chemins est coupé accidentellement, le noeud reçoit l'information par les chemins restants. Par exemple, si la liaison entre les noeuds N1 et N4 est coupée, le noeud N4 reçoit quand même l'information provenant du noeud N1 par l'intermédiaire du noeud N3.

Dans la commande et le contrôle d'appareils ou d'une installation, on est de plus en plus amené à transmettre en temps réel des images et du son, outre les informations de commande et de contrôle usuelles. Les réseaux locaux existants ne permettent pas la transmission en temps réel de son ou d'images, car, d'une part, leur débit est trop faible et, d'autre part, les informations sont transmises de manière asynchrone. Par exemple, dans un réseau FIP, le circuit maître émet périodiquement des salves de questions. Chaque première question d'une salve est donc émise périodiquement. Toutefois, chaque autre question d'une salve est émise quand la réponse à la question précédente a été émise. Or, le temps d'émission d'une réponse varie en fonction de l'occupation du noeud qui émet cette réponse et du nombre aléatoire de bits qu'elle contient. Ainsi, les questions à l'intérieur d'une salve sont émises de façon non-périodique. En outre, dans un réseau FIP, un noeud met un temps non-négligeable à répondre à une question car il doit effectuer un certain nombre de traitements tels qu'analyser la question pour reconnaître l'adresse d'une boite à lettres d'émission et transférer le contenu de oette boite à lettres dans un registre de sortie. Pendant ce temps, le réseau est inutilisé, ce qui diminue son débit.

Bien entendu, le manque de synchronisme des transferts d'un réseau peut être compensé dans une transmission unidirectionnelle en prévoyant des mémoires tampon en sortie et en entrée des noeuds. Ceci augmenterait le coût de chaque noeud et ne résout pas le problème du débit insuffisant. En outre, cette solution ne permet pas de compenser le manque de synchronisme dans une transmission bidirectionnelle en temps réel (une conversation), car elle introduit un retard de transmission qui augmente avec la taille des mémoires tampon.

Un objet de la présente invention est de prévoir un réseau local dont les noeuds sont de coût particulièrement faible, tout en permettant la transmission de son et d'images en plus d'une transmission de données.

Cet objet est atteint grâce à un procédé d'échange de trames d'information de longueur constante sur un réseau entre des circuits munis de canaux d'émission d'adresses uniques et/ou de canaux de réception associés à des adresses des canaux d'émission. Il comprend les étapes consistant à émettre périodiquement par un circuit maître des adresses de canaux d'émission, de manière que l'adresse de chaque canal d'émission est émise périodiquement ; à recevoir par chaque circuit chaque adresse et, si l'adresse correspond à un canal d'émission du circuit, émettre la trame d'information contenue dans ce canal d'émission après la réception de l'adresse suivante ; à recevoir par chaque circuit chaque trame d'information et, si l'adresse précédemment reçue par le circuit est associée à un canal de réception du circuit, fournir à ce canal de réception la trame reçue après la réception de l'adresse suivante ; et à réémettre par chaque circuit chaque première adresse reçue et chaque première trame d'information reçue.

Selon un mode de réalisation de la présente invention, chaque circuit, au moment où il devrait recevoir une adresse mais qu'il ne la reçoit pas, le cas échéant, émet la trame d'information contenue dans le canal d'émission correspondant à la dernière adresse reçue, ou fournit la trame reçue au canal de réception associé à la dernière adresse reçue.

Un circuit émetteur selon l'invention comprend au moins un canal d'émission d'adresse telle que les adresses des canaux d'émission des circuits reliés au réseau sont uniques ; un registre d'entrée destiné à recevoir périodiquement des adresses émises sur le réseau par un circuit maître et des trames émises sur le réseau en réponse à ces adresses ; un drapeau d'événement mis à un état de "question reçue" à l'instant où une adresse est reçue dans le registre d'entrée ; un registre de sortie recevant le contenu du canal d'émission lorsque le drapeau est à l'état de "question reçue" et que l'adresse contenue dans le registre d'entrée est celle du canal d'émission ; et une gâchette d'émission du contenu du registre de sortie, armée lorsque le drapeau est mis à l'état de "question reçue" et que l'adresse contenue dans le registre d'entrée est celle du canal d'émission, cette gâchette étant déclenchée et mise à zéro à une nouvelle mise à l'état de "question reçue" du drapeau.

Un circuit récepteur selon l'invention comprend au moins un canal de réception associé à une adresse d'un canal d'émission ; un registre d'entrée destiné à recevoir périodiquement des adresses émises sur le réseau par un circuit maître et des trames émises sur le réseau en réponse à ces adresses ; le canal de réception relié au registre d'entrée pour recevoir le contenu du registre d'entrée lorsqu'il est à la fois sélectionné et validé ; un drapeau d'événement mis à un état de "question reçue" à l'instant où une adresse est reçue dans le registre d'entrée, mis à l'état de "réponse reçue" à l'instant où une trame est reçue dans le registre d'entrée, et validant le canal de réception à l'état de "réponse reçue" ; et des moyens pour préparer la sélection du canal de réception lorsque le drapeau d'événement est mis à l'état de "question reçue" et que l'adresse contenue dans le registre d'entrée est celle associée au canal de réception, et pour sélectionner le canal de réception à la prochaine mise à l'état de "question reçue" du drapeau.

Selon un mode de réalisation de la présente invention, le circuit (récepteur ou émetteur) comprend un compteur initialisé à une valeur prédéterminée à chaque mise à l'état de "question reçue" du drapeau ; et des moyens pour provoquer les effets d'une mise à l'état de "question reçue" du drapeau lorsque le drapeau n'est pas mis à cet état au moment où le compteur a décompté la valeur prédéterminée.

Selon un mode de réalisation de la présente invention, les adresses sont émises dans des trames comprenant aussi la valeur d'initialisation du compteur.

Selon un mode de réalisation de la présente invention, le circuit comprend un drapeau de répétition de trame mis à un état d'autorisation de réception d'adresse peu avant l'expiration du comptage par le compteur, mis à un état d'autorisation de réception de réponse dès la réception d'une adresse, et mis à un état d'interdiction de réception dès la réception d'une réponse.

Un circuit maître selon l'invention comprend le drapeau susceptible d'être mis à un état de "question émise", cet état ayant la même cause et les mêmes effets qu'un état de "question reçue" et, en outre, armant une deuxième gâchette de validation du registre de sortie et provoquant le chargement d'une adresse à émettre dans le registre de sortie ; et un compteur mettant le drapeau à un état de "période atteinte" à chaque fois qu'il atteint une valeur maximale, cet état déclenchant la deuxième gâchette.

Selon un mode de réalisation de la présente invention, le circuit maître comprend un registre tampon stockant l'adresse contenue dans le registre d'entrée lorsque le drapeau est mis à l'état de "question émise" ; le registre de sortie recevant le contenu du canal d'émission lorsque le drapeau est mis à l'état de "période atteinte" et que l'adresse contenue dans le registre tampon est celle du canal d'émission ; et une troisième gâchette de validation du registre de sortie, armée lorsque le drapeau est mis à l'état de "période atteinte" et que l'adresse contenue dans le registre tampon est celle du canal d'émission, et déclenchée lorsque le drapeau est mis à l'état de "question émise".

Ces objets, caractéristiques, avantages ainsi que d'autres de la présente invention seront exposés plus en détail dans la description suivante de modes de réalisation particuliers faite à titre non-limitatif à l'aide des figures jointes parmi lesquelles :
la figure 1, précédemment décrite, représente un exemple de réseau FIP ;
la figure 2 représente un réseau utilisant la technique d'inondation ;
la figure 3 représente un exemple de réseau selon l'invention ;
la figure 4 représente un exemple d'occupation des lignes reliant les noeuds du réseau de la figure 3 ;
la figure 5 illustre un exemple d'occupation selon l'invention des lignes du réseau de la figure 3 ;
la figure 6 représente schématiquement un mode de réalisation de noeud selon l'invention ;
les figures 7A à 7D illustrent un mécanisme de réception d'information d'un noeud selon l'invention ;
les figures 8A à 8C illustrent un mécanisme d'émission d'information par un noeud selon l'invention ; et
les figures 9A à 9G illustrent le fonctionnement d'un noeud maître selon l'invention pouvant également émettre ou recevoir des informations.

Un réseau selon l'invention reprend la technique des "abonnés" du réseau classique de la figure 1. Toutefois, le noeud maître, qui comprend comme les autres noeuds des abonnés, est prévu pour émettre des questions périodiquement de manière que chaque abonné producteur T soit interrogé périodiquement. En outre, les informations échangées par le réseau (questions et réponses) sont émises dans des trames de longueur fixe.

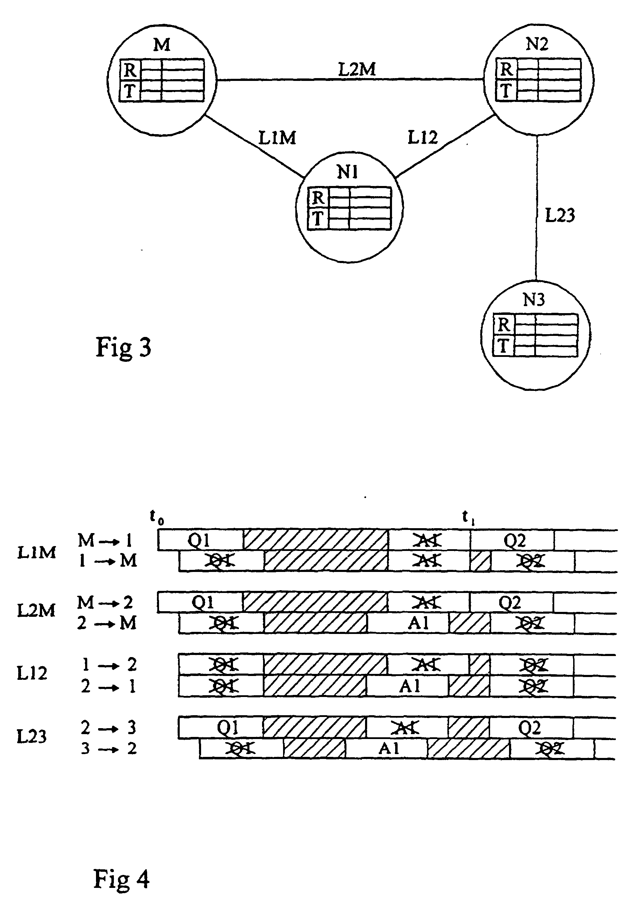

La figure 3 représente un exemple de réseau selon l'invention. Dans cet exemple, les noeuds sont connectés par des liaisons point à point et prévus pour fonctionner selon la technique de l'inondation (figure 2). Il s'avère que la technique des abonnés se prête particulièrement bien à être combinée avec la technique de l'inondation.

La possibilité de transmettre des images ou du son est assurée par le fait que les trames de réponse sont de longueur constante et émises périodiquement (en réponse aux questions périodiques). Les cadences de production des abonnés producteurs sont généralement constantes, mais peuvent différer d'un abonné à l'autre. Dans ce cas, il est facile d'adapter le réseau aux différentes cadences en prévoyant d'interroger les abonnés producteurs rapides plus souvent que les lents.

La figure 3 représente un exemple de réseau selon l'invention. Des noeuds N1 et N2 sont reliés entre eux par une liaison L12 et à un noeud maître M par des liaisons respectives L1M et L2M. Un noeud N3 est relié au noeud N2 par une liaison L23. Les liaisons L sont des liaisons point à point bidirectionnelles. Chaque noeud, y compris le noeud maitre M, comprend au moins un abonné consommateur, ou canal de réception R, et/ou au moins un abonné producteur, ou canal d'émission T.

La figure 4 illustre un exemple d'occupation des liaisons L. Pour chaque liaison L, on a représenté l'occupation de chacun des sens de la liaison. On distingue une trame de question d'une trame de réponse par les premiers bits de la trame (par exemple un bit de début suivi d'un bit qui différencie une question et une réponse).

A un instant t0, le noeud maître M émet une question Q1 qui arrive simultanément aux noeuds N1 et N2 par la liaison L1N et L2M. Dès que les noeuds M1 et N2 reconnaissent qu'il s'agit d'une première question, cette question est répétée. Le noeud N1 répète la question Q1 sur les lignes L1M et L12 tandis que le noeud N2 répète la question Q1 sur les lignes L2M, L12 et L23. Ainsi, les noeuds M, N1 et N2 reçoivent pour la deuxième fois la question Q1. Elle est alors ignorée, grâce à un mécanisme décrit ultérieurement, ce qui est représenté par la question Q1 barrée. Le noeud N3 reçoit pour la première fois la question Q1 sur la ligne L23 et la répète sur cette ligne. Le noeud L2 reçoit alors la question Q1 pour la troisième fois et l'ignore.

La réponse A1 à la question Q1 est contenue dans le canal d'émission du noeud N3. Un certain temps après avoir reçu la question Q1, le noeud N3 émet la réponse A1 sur la ligne L23. Ce temps de latence, nécessaire au noeud N3 pour traiter la question Q1, est sensiblement constant et peut être de l'ordre de grandeur du temps de transmission d'une trame.

Le noeud N2 reçoit la réponse A1 pour la première fois et la répète sur les lignes L2M, L12 et L23. La réponse A1 arrive simultanément aux noeuds M, N1 et N3. Le noeud N3, ayant émis cette question, l'ignore. Les noeuds M et N1 répètent la réponse sur les lignes L1M, L2M et L12. Les noeuds M, N1 et N2 reçoivent simultanément la réponse A1 pour la deuxième fois et l'ignorent.

A un instant t₁, suivant l'instant t₀ d'une période, le noeud maître M émet une question Q2 qui suit le même cheminement que la question Q1. Pour être sûr de choisir une valeur convenable de la période d'émission des questions, elle est choisie au moins égale à la somme de la durée que met une question à parcourir la distance la plus longue séparant un noeud du noeud maître et de la durée que met une réponse à parcourir la distance la plus longue séparant les deux noeuds les plus éloignés. La distance la plus longue entre deux noeuds est mesurée en comptant le nombre maximum de noeuds disposés entre le deux noeuds en question en suivant les liaisons L. Cette période dépend donc du temps de propagation des lignes, du temps de répétition d'une question ou d'une réponse par un noeud, et du temps de latence d'un noeud pour émettre une réponse à une question.

La façon de procéder selon la figure 4 n'est pas optimale car, pendant un délai irréductible entre la réception d'une question et l'émission de la réponse par un noeud, le réseau est inutilisé.

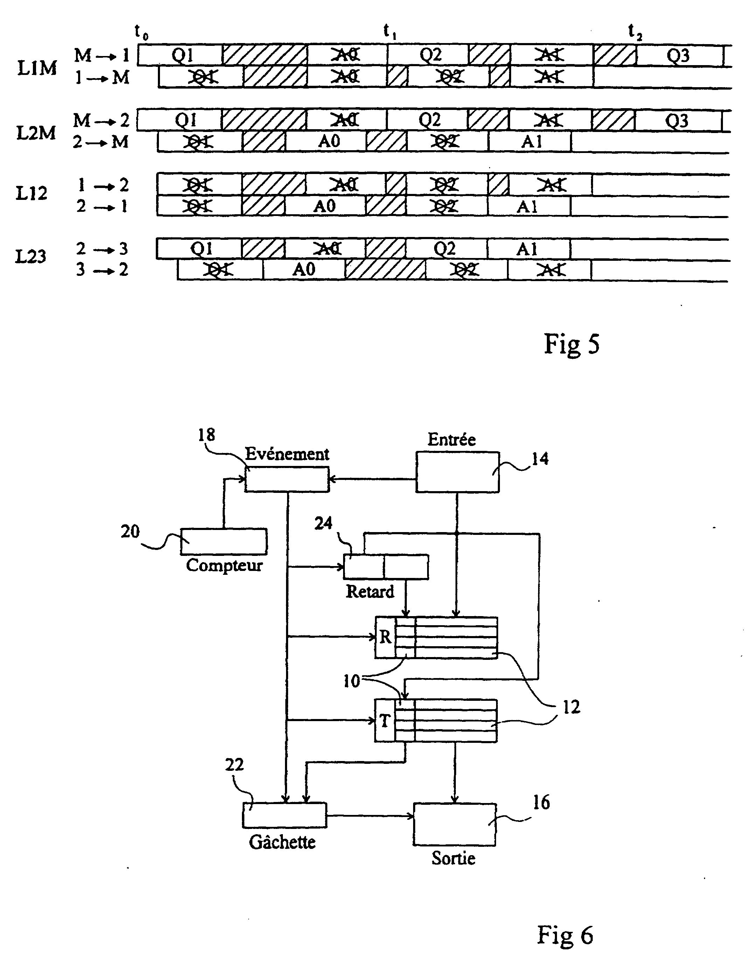

La figure 5 représente à l'aide d'un exemple une optimisation selon l'invention du réseau de la figure 3. Cette optimisation consiste à entrelacer les questions et les réponses sur le réseau, c'est-à-dire qu'une réponse à une question est émise seulement après réception de la question suivante. La figure 5 illustre un exemple d'entrelacement dans le cas du réseau de la figure 3.

A un instant t₀, le noeud maître M émet une question Q1 qui suit le même cheminement que dans la figure 4. C'est le noeud N2 qui contient une réponse A1 à la question Q1. Toutefois, quand la question Q1 atteint le noeud N2, ce dernier n'émet rien sur le réseau mais se prépare à émettre la réponse A1 dès la réception de la question Q2 à venir. Le noeud 2 dispose d'une période pour cette préparation. Ce temps est suffisant même pour une réalisation logicielle du mécanisme, ce qui permet de réduire le coût du matériel.

Le noeud N3 a préparé la réponse A0 à la question précédant la question Q1. Quand il reçoit la question Q1, il émet la réponse A0 juste après avoir répété la question Q1. La réponse A0 atteint tous les noeuds en suivant le cheminement de la réponse A1 dans la figure 4.

A un instant ti suivant l'instant t₀ d'une période réduite par rapport à celle de la figure 4 d'un temps de latence, le noeud maître M émet la question Q2. Cette question suit le même cheminement que la question Q1. Le noeud N2, qui avait préparé l'émission de la réponse A1 en recevant la question Q1, émet cette réponse A1 juste après avoir répété la question Q2, et ainsi de suite.

La figure 6 représente schématiquement certains éléments d'un noeud de réseau selon l'invention permettant d'obtenir l'entrelacement des questions et des réponses. Le noeud comprend au moins un canal de réception R et/ou au moins un canal d'émission T. Chaque canal comprend une zone d'adresses 10 et une zone de données 12. Les zones d'adresses 10 des canaux d'émission contiennent, comme on l'a précédemment indiqué, des adresses uniques, de manière qu'un seul canal d'émission réponde à une question. Par contre, les zones d'adresses 10 des canaux de réception contiennent des adresses quelconques de canaux d'émission que l'utilisateur choisit et programme pour établir des liaisons logiques entre les canaux.

Les zones de données 12 des canaux de réception sont connectées à un registre d'entrée 14 dans lequel est écrite la première question ou la première réponse arrivant sur les liaisons point à point du noeud. Les zones de données 12 des canaux d'émission sont connectées pour fournir leur contenu à un registre de sortie 16 qui est lui-même prévu pour fournir son contenu sur toutes les lignes point à point du noeud.

Les contenus des zones de données 12 des canaux de réception sont transmis vers des appareils récepteurs, par exemple un affichage ou un haut-parleur, ou tout simplement un interrupteur. Les contenus des zones de données 12 des canaux d'émission sont fournis par un appareil émetteur, par exemple une caméra ou un microphone, ou tout simplement un capteur.

L'arrivée d'une trame dans le registre d'entrée 14 valide un drapeau d'événement 18. Ce drapeau 18 est mis à l'état de "question reçue" lorsque le registre d'entrée 14 vient de recevoir une question, et est mis à l'état de "réponse reçue" lorsque le registre d'entrée 14 vient de recevoir une réponse. Un compteur 20 peut également agir sur le drapeau d'événement 18. Selon l'état du drapeau d'événement, les accès aux zones de données 12 des canaux sont validés. Le drapeau d'événement 18 agit également pour armer ou déclencher une gâchette 22 de validation du registre de sortie 16.

Les adresses (les questions) arrivant dans le registre d'entrée 14 sont comparées aux adresses contenues dans les zones d'adresses 10. L'identité entre l'adresse contenue dans le registre d'entrée 14 et celle d'un canal d'émission T autorise l'armement de la gâchette 22. L'identité entre l'adresse contenue dans le registre d'entrée 14 et l'adresse d'un canal de réception R entraîne le stockage d'un signal de sélection de ce canal dans un circuit de retard 24. La sélection effective du canal de réception aura lieu lorsque le drapeau d'événement est mis ultérieurement à un état prédéterminé.

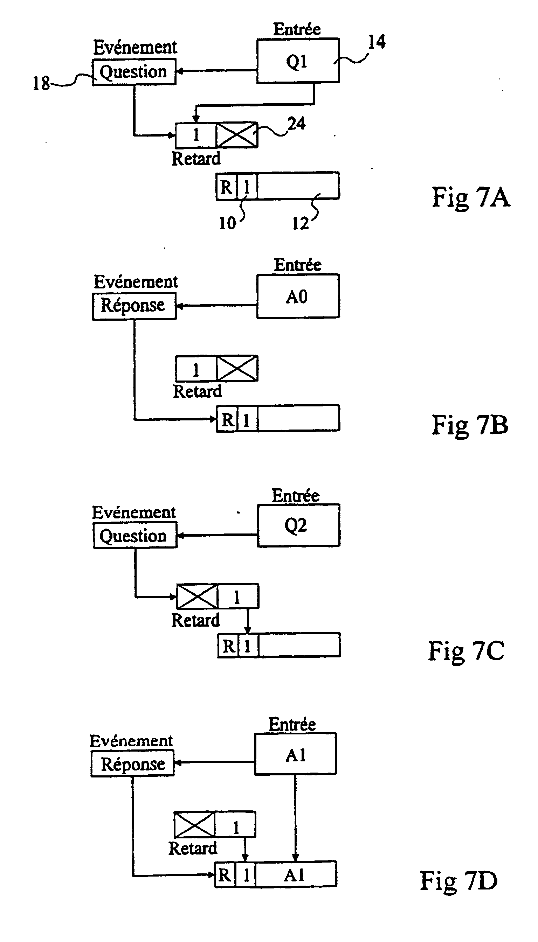

Les figures 7A à 7D illustrent le fonctionnement de la structure de la figure 6 lors de la réception d'une réponse destinée à un canal de réception du noeud. Ces figures ne représentent que les éléments effectivement utilisés de la figure 6, à savoir le registre d'entrée 14, un canal de réception d'adresse 1, le drapeau d'événement 18 et le circuit de retard 24.

A la figure 7A, le registre d'entrée 14 reçoit une question Q1 (adresse 1). Le drapeau d'événement 18 est mis à l'état de "question reçue". La mise à cet état valide un décalage du circuit de retard 24 dont la sortie n'a aucun effet ici. La question Q1 correspond à l'adresse 1 du canal de réception. Cette adresse (ou un signal de sélection du canal de réception) est stockée dans le circuit de retard 24, mais ne sélectionne pas encore le canal.

A la figure 7B, une réponse A0 arrive dans le registre d'entrée 14. L'arrivée de cette réponse met le drapeau d'événement à l'état de "réponse reçue". Cet état valide le canal de réception R, mais celui-ci, n'étant pas sélectionné par le circuit de retard, ne prend pas en compte le contenu du registre d'entrée.

A la figure 7C, une nouvelle question, Q2, arrive dans le registre d'entrée. Le drapeau d'événement est mis à l'état de question reçue, ce qui entraîne le décalage du circuit de retard. La valeur 1 décalée sélectionne le canal de réception, mais celui-ci n'est pas validé et ne prend pas en compte le contenu du registre d'entrée.

A la figure 7D, la réponse A1 à la question Q1 arrive dans le registre d'entrée. Le drapeau d'événement est mis à l'état de "réponse reçue", ce qui valide le canal de réception. Celui-ci étant toujours sélectionné par le circuit de retard, prend en compte la répanse A1 contenue dans le registre d'entrée.

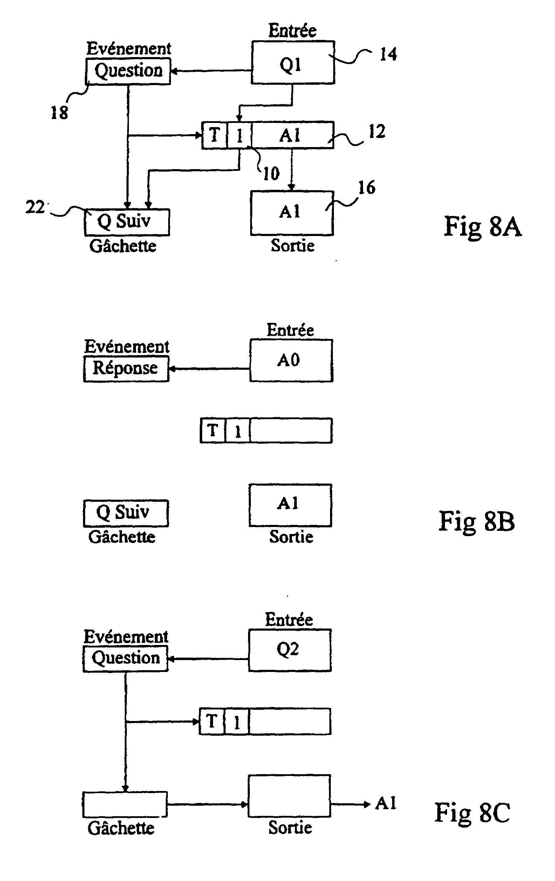

Les figures 8A à 8C illustrent le fonctionnement de la structure de la figure 6 lors de l'émission d'une réponse à une question.

A la figure 8A, le registre d'entrée 14 reçoit une question Q1 dont l'adresse 1 correspond à celle d'un canal d'émission contenant une réponse A1. Le canal d'émission est sélectionné par cette adresse et validé par la mise à l'état de "question reçue" du drapeau d'événement 18 ; la réponse A1 est transférée dans le registre de sortie 16, mais n'est pas encore émise. La mise à l'état de "question reçue" du drapeau d'événement arme la gâchette 22 pour un déclenchement à la réception de la question suivante. Cet armement est autorisé par le fait que l'adresse contenue dans le registre d'entrée 14 correspond à l'adresse du canal d'émission.

A la figure 8B, une réponse A0 à une question précédente est reçue dans le registre de réception. Le drapeau d'événement est mis à l'état de "réponse reçue". Aucun autre événement ne se produit.

A la figure 8C, le registre de réception reçoit une question Q2. Le drapeau d'événement est mis à l'état de "question reçue", ce qui déclenche la gâchette. Le déclenchement de la gâchette entraîne l'émission du contenu A1 du registre de sortie. Le drapeau d'événement valide le canal d'émission, mais celui-ci ne fournit pas son contenu au registre de sortie car il n'est pas sélectionné par l'adresse contenue dans le registre d'entrée.

Les deux mécanismes, de réception et d'émission, que l'on vient de décrire fonctionnent parfaitement si chaque question arrive effectivement au noeud.

Toutefois, si une question n'arrivait pas, par exemple à cause d'une perturbation dans une liaison entraînant la perte de la question, il se présente deux problèmes. Un premier problème est que, si le noeud a préparé la réponse à la question précédente, cette réponse serait émise après la question suivante, c'est-à-dire à un moment erroné où un autre noeud pourrait émettre la réponse à la question perdue. Un deuxième problème est que, si le noeud attend une réponse à la question précédente, elle serait ignorée par le noeud qui ne prendrait en compte que la réponse émise après la question suivante, qui est en principe celle de la question perdue.

Pour éviter ces inconvénients, la présente invention prévoit qu'un noeud attende une question pendant une durée légèrement supérieure à une période puis agisse comme si la question avait été reçue même si elle n'a pas été reçue. Pour cela, le compteur 20 de la figure 6 est initialisé à une valeur légèrement supérieure à une période à chaque mise à l'état de "question reçue" du drapeau d'événement. Si le drapeau d'événement n'est pas remis à l'état de question reçue au moment où le compteur atteint sa valeur programmée, le compteur met lui-même le drapeau d'événement à l'état de "question reçue" et se réinitialise. Le noeud se comporte alors exactement comme s'il avait reçu une question qui ne le concerne pas, tout en lui permettant de prendre en compte la réponse suivante qui lui est destinée ou bien d'émettre une réponse mise en attente dans le registre de sortie.

Au lieu d'être perdue, une question peut être retardée, par exemple parce qu'une liaison a été coupée ou parce que la période d'émission des questions par le noeud maître a été augmentée. Avec le mécanisme qui vient d'être décrit, la question retardée est ignorée, ce qui n'est pas souhaitable quand cette situation est durable. Pour éviter cela, chaque noeud est prévu pour détecter la question retardée et permettre au noeud d'accepter une question retardée si cette situation se produit un certain nombre de fois. Alors, dans le cas d'un changement de période, il convient de pouvoir modifier la valeur d'initialisation du compteur 20. Pour cela, chaque trame de question émise par le noeud maître contient la valeur servant à réinitialiser le compteur. Ceci entraîne une importante souplesse du réseau, car on peut alors programmer des modifications de période dues à des modifications topographiques du réseau (ajout ou retrait de noeud), ce qui permet d'optimiser le réseau pour chaque situation.

Pour ne pas prendre en compte (répéter et éventuellement traiter) une même trame plus d'une fois, on utilise le mécanisme suivant. A un instant juste avant l'expiration d'une période, par exemple quelques cycles avant que le compteur 20 ait compté une période, un drapeau de répétition de trame (non représenté) est mis à un état de "réception de question". Cet état n'autorise le noeud à prendre en compte que la première question lui parvenant.

Lorsque cette question est reçue, elle est aussitôt réémise et le drapeau de répétition est mis à un état de "réception de réponse" qui n'autorise le noeud à prendre en compte que la première réponse lui parvenant.

Lorsque cette réponse est reçue, elle est aussitôt réémise et le drapeau de répétition est mis à un état "bloqué" qui interdit le noeud à prendre en compte les trames lui parvenant, jusqu'à la remise à l'état de "réception de question" à l'expiration de la période.

Comme on l'a précédemment indiqué, un noeud maître peut également recevoir ou émettre des réponses. Il émet ou reçoit les réponses à ses propres questions.

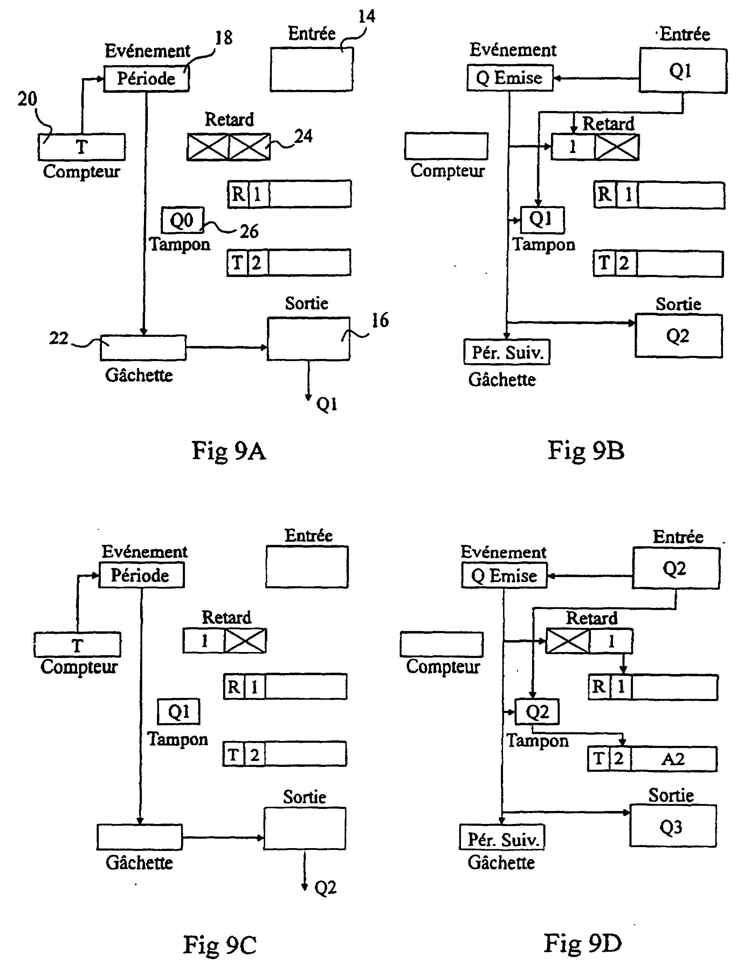

Les figures 9A à 9G illustrent le mécanisme de réception et d'émission de réponses d'un noeud maître.

A la figure 9A, le compteur 20, précédemment initialisé à une période T, a décompté cette période. Le drapeau d'événement 18 est mis à un état de "période atteinte". Cet état de "période atteinte" déclenche la gâchette 22 pour émettre le contenu, une question Q1, du registre de sortie 16. Un registre tampon 26 stocke la question Q0 précédemment émise, ou du moins un identificateur de cette question.

A la figure 9B, le registre d'entrée reçoit la question Q1 (ou simule sa réception) émise par le registre de sortie. Le drapeau d'événement est mis à un état de "question émise" qui a le même effet que l'état de "question reçue" sur le circuit de retard 24. Ce circuit de retard stocke l'adresse 1 de la question contenue dans le registre d'entrée qui correspond à un canal de réception. L'état de "question émise" arme la gâchette pour déclencher l'émission du contenu du registre de sortie à la prochaine mise à l'état de "période atteinte" du drapeau d'événement. En même temps, l'état de "question émise" provoque le chargement dans le registre de sortie de la question suivante Q2 à émettre et de la question Q1 du registre d'entrée dans le registre tampon.

A une étape non-représentée, identique à celle de la figure 7B, le registre d'entrée reçoit une réponse qui ne concerne pas le noeud.

A la figure 9C, le compteur a décompté la période et le drapeau d'événement est mis à l'état de "période atteinte", ce qui déclenche la gâchette pour émettre la question Q2 contenue dans le registre de sortie.

A la figure 9D, la question Q2 est reçue dans le registre d'entrée, ce qui met à l'état de "question émise" le drapeau d'événement. Le contenu du circuit de retard est décalé et l'adresse 1 sélectionne maintenant le canal de réception qui n'est pas encore validé. Le registre tampon reçoit le contenu Q2 du registre d'entrée. L'adresse du canal d'émission T correspond à celle contenue dans le registre tampon ; le canal est sélectionné mais non encore validé. La gâchette est armée pour déclencher l'émission du contenu du registre de sortie, maintenant Q3, à la prochaine période.

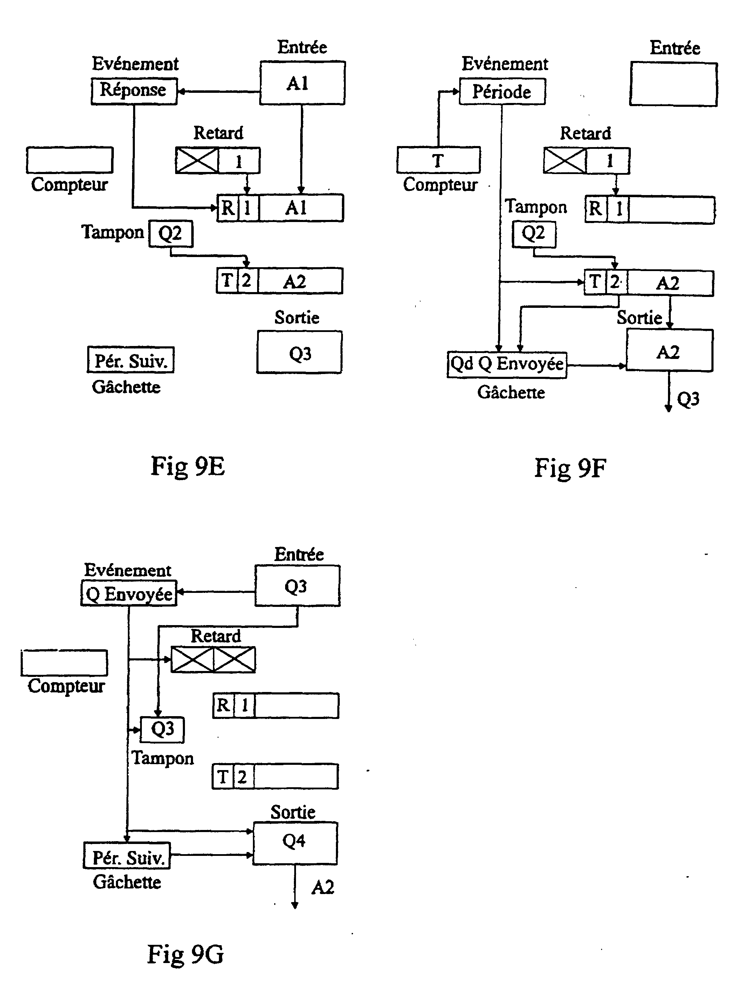

A la figure 9E, le registre d'entrée reçoit la réponse A1 à la question Q1. Cette étape correspond à celle de la figure 7D. En outre, le canal d'émission T est toujours sélectionné par le registre tampon, mais n'est pas validé.

A la figure 9F, une nouvelle période est atteinte. Le drapeau d'événement est mis à l'état de "période atteinte", ce qui déclenche la gâchette pour émettre la question Q3 contenue dans le registre de sortie. En même temps, le canal d'émission T est validé et son contenu, la réponse A2, est transféré dans le registre de sortie. Dans ce cas particulier, la gâchette est armée pour se déclencher à la prochaine mise à l'état de "question émise" du drapeau d'événement.

A la figure 9G, la question Q3 est reçue dans le registre de réception, le drapeau d'événement est mis à l'état de "question émise" ce qui déclenche la gâchette pour émettre le contenu A2 du registre de sortie. Simultanément, une nouvelle question Q4 est chargée dans le registre de sortie et la question Q3 du registre d'entrée est recopiée dans le mémoire registre tampon.

La présente invention a été décrite à l'aide de liaisons point à point qui rendent le réseau tolérant aux ruptures de ligne. Bien entendu, l'invention s'applique également à un bus. On peut même prévoir que les noeuds aient des liaisons point à point et des liaisons par bus.

## Revendications

1. Procédé d'échange de trames d'information de longueur constante sur un réseau entre des circuits (M, N) munis de canaux d'émission (T) d'adresses uniques et/ou de canaux de réception (R) associés à des adresses des canaux d'émission, **caractérisé en ce qu'**il canprend les étapes suivantes :
- émettre périodiquement par un circuit maître (M) des adresses (Q) de canaux d'émission, de manière que l'adresse de chaque canal d'émission est émise périodiquement ;
- recevoir par chaque circuit (M, N) chaque adresse et, si l'adresse correspond à un canal d'émission du circuit, émettre la trame d'information contenue dans ce canal d'émission après la réception de l'adresse suivante ;
- recevoir par chaque circuit chaque trame d'information et, si l'adresse précédemment reçue par le circuit est associée à un canal de réception du circuit, fournir à ce canal de réception la trame reçue après la réception de l'adresse suivante ; et
- réémettre par chaque circuit chaque première adresse reçue et chaque première trame d'information reçue.

2. Procédé selon la revendication 1, **caractérisé en ce que** chaque circuit, au moment où il devrait recevoir une adresse mais qu'il ne la reçoit pas, le cas échéant, émet la trame d'information contenue dans le canal d'émission correspondant à la dernière adresse reçue, ou fournit la trame reçue au canal de réception associé à la dernière adresse reçue.

3. Circuit destiné à être relié à un réseau, comprenant au moins un canal d'émission (T) d'adresse telle que les adresses des canaux d'émission des circuits reliés au réseau sont uniques, **caractérisé en ce qu'**il comprend :
- un registre d'entrée (14) destiné à recevoir périodiquement des adresses (Q) émises sur le réseau par un circuit maître (M) et des trames (A) émises sur le réseau en réponse à ces adresses ;
- un drapeau d'événement (18) mis à un état de "question reçue" à l'instant où une adresse est reçue dans le registre d'entrée ;
- un registre de sortie (16) recevant le contenu du canal d'émission lorsque le drapeau est à l'état de "question reçue" et que l'adresse contenue dans le registre d'entrée est celle du canal d'émission ; et
- une gâchette (22) d'émission du contenu du registre de sortie, armée lorsque le drapeau est mis à l'état de "question reçue" et que l'adresse contenue dans le registre d'entrée est celle du canal d'émission, cette gâchette étant déclenchée et mise à zéro à une nouvelle mise à l'état de "question reçue" du drapeau.

4. Circuit destiné à être relié à un réseau, comprenant au moins un canal de réception (R) associé à une adresse d'un canal d'émission (T), **caractérisé en ce qu'**il comprend :
- un registre d'entrée (14) destiné à recevoir périodiquement des adresses (Q) émises sur le réseau par un circuit maître (M) et des trames (A) émises sur le réseau en réponse à ces adresses ;
- le canal de réception relié au registre d'entrée pour recevoir le contenu du registre d'entrée lorsqu'il est à la fois sélectionné et validé ;
- un drapeau d'événement (18) mis à un état de "question reçue" à l'instant où une adresse est reçue dans le registre d'entrée, mis à l'état de "réponse reçue" à l'instant où une trame est reçue dans le registre d'entrée, et validant le canal de réception à l'état de "réponse reçue" ; et
- des moyens (24) pour préparer la sélection du canal de réception lorsque le drapeau d'événement est mis à l'état de "question reçue" et que l'adresse contenue dans le registre d'entrée est celle associée au canal de réception, et pour sélectionner le canal de réception à la prochaine mise à l'état de "question reçue" du drapeau.

5. Circuit selon la revendication 3 ou 4, **caractérisé en ce qu'**il comprend :
- un compteur (20) initialisé à une valeur prédéterminée à chaque mise à l'état de "question reçue" du drapeau ; et
- des moyens pour provoquer les effets d'une mise à l'état de "question reçue" du drapeau lorsque le drapeau n'est pas mis à cet état au manent où le compteur a décompté la valeur prédéterminée.

6. Circuit selon la revendication 5, **caractérisé en ce que** les adresses sont émises dans des trames comprenant aussi la valeur d'initialisation du compteur (20).

7. Circuit selon la revendication 5, **caractérisé en ce qu'**il comprend un drapeau de répétition de trame mis à un état d'autorisation de réception d'adresse peu avant l'expiration du comptage par le compteur (20), mis à un état d'autorisation de réception de réponse dès la réception d'une adresse, et mis à un état d'interdiction de réception dès la réception d'une réponse.

8. Circuit maître selon la revendication 3 ou 4, **caractérisé en ce qu'**il comprend :
- le drapeau (18) susceptible d'être mis à un état de "question émise", cet état ayant la même cause et les mêmes effets qu'un état de "question reçue" et, en outre, armant une deuxième gâchette (22) de validation du registre de sortie (16) et provoquant le chargement d'une adresse à émettre dans le registre de sortie ; et
- un compteur (20) mettant le drapeau à un état de "période atteinte" à chaque fois qu'il atteint une valeur maximale, cet état déclenchant la deuxième gâchette.

9. Circuit maître selon la revendication 8, **caractérisé en ce qu'**il comprend :
- un registre tampon (26) stockant l'adresse contenue dans le registre d'entrée (14) lorsque le drapeau est mis à l'état de "question émise" ;
- le registre de sortie (16) recevant le contenu du canal d'émission lorsque le drapeau est mis à l'état de "période atteinte" et que l'adresse contenue dans le registre tampon est celle du canal d'émission ; et
- une troisième gâchette (22) de validation du registre de sortie, armée lorsque le drapeau est mis à l'état de "période atteinte" et que l'adresse contenue dans le registre tampon est celle du canal d'émission, et déclenchée lorsque le drapeau est mis à l'état de "question émise".

## Patentansprüche

1. Verfahren zum Austausch von Informationsrahmen mit einer konstanten Länge auf einem Netzwerk zwischen Schaltungen bzw. Schaltkreisen (M, N) mit Transmissions- bzw. Sendekanälen (T) von vereinheitlichten Adressen und/oder Empfangskanälen (R), die Adressen der Transmissionskanäle zugeordnet sind, **dadurch gekennzeichnet, dass** es die folgenden Schritte aufweist:
- periodisches Übertragen bzw. Senden von einer Master- bzw. Hauptschaltung (M) von Adressen (Q) von Transmissionskanälen, so dass die Adresse eines jeden Transmissionskanals periodisch übertragen wird;
- Empfangen einer jeden Adresse durch jede Schaltung (M, N) und wenn die Adresse einem Transmissionskanal der Schaltung entspricht, Übertragen des Informationsrahmen, der im Transmissionskanal enthalten ist, und zwar nach dem Empfang der nächsten Adresse;
- Empfangen jedes Informationsrahmens durch jede Schaltung und, wenn die zuvor durch die Schaltung empfangene Adresse einem Empfangskanal der Schaltung zugeordnet ist, Liefern des empfangenen Rahmens an diesen Empfangskanal nach dem Empfang der nächsten Adresse; und
- erneutes Übertragen bzw. Senden durch jede Schaltung jeder ersten empfangenen Adresse und jedes ersten empfangenen Informationsrahmens.

2. Verfahren nach Anspruch 1, **dadurch gekennzeichnet, dass** jede Schaltung zum Zeitpunkt, wenn sie eine Adresse empfangen sollte, die nicht ankommt, sofern notwendig, den im Transmissionskanal enthaltenen Informationsrahmen entsprechend der zuletzt empfangenen Adresse überträgt oder den empfangenen Rahmen an den Empfangskanal, der der zuletzt empfangenen Adresse zugeordnet ist, liefert.

3. Schaltung zur Verbindung eines Netzwerks, die zumindest einen Adressentransmissionskanal bzw. Adressensendekanal (T) aufweist, mit einer Adresse, so dass die Adressen der Transmissionskanäle der mit dem Netzwerk verbundenen Schaltungen vereinheitlicht sind, dadurch gekenhzeichnet, dass sie Folgendes aufweist:
- ein Eingaberegister (14) zum periodischen Empfangen von Adressen (Q), die über das Netzwerk über eine Master- bzw. Hauptschaltung (M) übertragen werden, und von Rahmen (A), die über das Netzwerk als Antworten auf diese Adressen übertragen werden;
- eine Ereignisfahne bzw. Ereignisflag (18), die auf einen "Anfrageempfangen"-Zustand gesetzt wird zum Zeitpunkt, wenn eine Adresse im Eingaberegister empfangen wird;
- ein Ausgaberegister (16), das den Inhalt des Transmissionskanals empfängt, wenn die Flagge im "Anfrage-empfangen"-Zustand ist und die Adresse, die im Eingaberegister enthalten ist, jene des Sende- bzw. Transmissionskanals ist; und
- einen Trigger bzw. Auslöser (22) für das Senden bzw. Übertragen des Inhalts des Ausgaberegisters, der in Bereitschaft versetzt wird, wenn die Flagge auf den "Anfrage-empfangen"-Zustand gesetzt ist und die im Eingaberegister enthaltene Adresse jene des Transmissionskanals ist, wobei dieser Trigger ausgelöst und zurückgesetzt wird durch ein neues Setzen der Flagge auf den "Anfrage-empfangen"-Zustand.

4. Schaltung zum Verbinden eines Netzwerks, die zumindest einen Empfangskanal (R) aufweist, der eine Adresse eines Transmissionskanals (T) zugeordnet ist, **dadurch gekennzeichnet, dass** sie Folgendes aufweist:
- ein Eingaberegister (14) für das periodische Empfangen von Adressen (Q), die über das Netzwerk durch eine Master- bzw. Hauptschaltung (M) übertragen werden, und von Rahmen (A), die über das Netzwerk als Antworten auf diese Adressen übertragen werden;
- wobei der Empfangskanal mit dem Eingaberegister zum Empfangen des Inhalts des Eingaberegisters verbunden wird, wenn er sowohl ausgewählt als auch freigeschalten ist;
- eine Ereignisfahne bzw. Ereignisflag (18), die auf einen "Anfrageempfangen"-Zustand gesetzt wird zum Zeitpunkt, wenn eine Adresse im Eingaberegister empfangen wird, die weiter auf einen "Antwortempfangen"-Zustand gesetzt wird zum Zeitpunkt wenn der Rahmen im Eingaberegister empfangen wird, und die den Empfangskanal im "Antwort-empfangen"-Zustand freigibt; und
- Mittel (24) für das Vorbereiten der Auswahl des Empfangskanals, wenn die Ereignisflagge auf den "Anfrage-empfangen"-Zustand gesetzt ist und die im Eingaberegister enthaltene Adresse dem Empfangskanal zugeordnet ist, und für das Auswählen des Empfangskanals beim nächsten Setzen der Flagge auf den "Anfrage-empfangen"-Zustand.

5. Schaltung nach Anspruch 3 oder 4, **dadurch gekennzeichnet, dass** sie Folgendes aufweist:
- einen Zähler (20), der auf einen vorbestimmten Wert gesetzt wird bei jedem Setzen der Flagge auf den "Anfrage-empfangen"-Zustand; und
- Mittel für das Hervorrufen der Wirkungen eines Setzens der Flagge auf den "Anfrage-empfangen"-Zustand, wenn die Flagge nicht in diesen Zustand zum Zeitpunkt gesetzt ist, wenn der Zähler bis zu dem vorbestimmten Wert heruntergezählt hat.

6. Schaltung nach Anspruch 5, **dadurch gekennzeichnet, dass** die Adressen in Rahmen übertragen werden, die auch den Setzwert für den Zähler (20) aufweisen.

7. Schaltung nach Anspruch 5, **dadurch gekennzeichnet, dass** sie eine Rahmenwiederholflagge aufweist, die in einen Zustand gesetzt ist, der einen Adressenempfang autorisiert vor dem Ablauf des Herunterzählens durch den Zähler (20), die weiter auf einen Zustand gesetzt ist, der einen Empfang der Antwort autorisiert, sobald eine Adresse empfangen wird, und die auf einen Zustand gesetzt ist, der den Empfang verbietet, sobald eine Antwort empfangen ist.

8. Master- bzw. Hauptschaltung gemäß Anspruch 3 oder 4, **dadurch gekennzeichnet, dass** sie Folgendes aufweist:
- die Flagge (18), die auf einen "Anfrage-gesendet"-Zustand setzbar ist, wobei dieser Zustand die selben Gründe und die selben Wirkungen hat wie ein "Anfrage-empfangen"-Zustand, und des Weiteren zum in Bereitschaft Versetzen eines zweiten Triggers bzw. Auslösers (22) für das Freigeben des Ausgaberegisters (16) und das Hervorrufen eines Ladens einer Adresse, die in das Ausgaberegister übertragen bzw. gesendet werden soll; und
- einen Zähler (20), der die Flagge auf einen "Dauer-erreicht"-Zustand setzt jedes Mal dann, wenn er einen Maximalwert erreicht, wobei dieser Zustand den zweiten Trigger auslöst.

9. Masterschaltung nach Anspruch 8, **dadurch gekennzeichnet, dass** sie Folgendes aufweist:
- ein Pufferregister (26), das die im Eingaberegister (14) gespeicherten Adressen speichert, wenn die Flagge auf den "Anfrage-übertragen"-Zustand gesetzt ist;
- wobei das Ausgaberegister (16) den Inhalt des Übertragungs- bzw. Transmissionskanals empfängt, wenn die Flagge auf den "Dauererreicht"-Zustand gesetzt ist und die im Pufferregister enthaltene Adresse jene des Transmissionskanals ist; und
- einen dritten Trigger bzw. Auslöser (22) für das Freigeben des Ausgaberegisters, der in Bereitschaft versetzt wird, wenn die Flagge auf den "Dauer-erreicht"-Zustand gesetzt ist und die im Pufferregister enthaltene Adresse jene des Transmissionskanals ist, und welcher ausgelöst wird, wenn die Flagge auf den "Anfrage-übertragen"-Zustand gesetzt ist.

## Claims

1. A method for exchanging information frames having a constant length on a network between circuits (M, N) having transmission channels (T) of unified addresses and/or reception channels (R) associated with addresses of transmission channels, **characterized in that** it includes the steps of:
- periodically transmitting from a master circuit (M) addresses (Q) of transmission channels, so that the address of each transmission channel is periodically transmitted;
- receiving each address by each circuit (M, N) and, when the address corresponds to a transmission channel of the circuit, transmitting the information frame contained in the transmission channel after receiving the next address;
- receiving each information frame by each circuit and, when the address previously received by the circuit is associated with a reception channel of .the circuit, providing the received frame to this reception channel after receiving the next address; and
- retransmitting from each circuit each first address received and each first information frame received.

2. The method of claim 1, **characterized in that** each circuit, at the time when it should be receiving an address which does not arrive, when necessary, transmits the information frame contained in the transmission channel corresponding to the last address received, or provides the received frame to the reception channel associated with the last address received.

3. A circuit for connection to a network, including at least one address transmission channel (T) having an address such that the addresses of the transmission channels of the circuits connected to the network are unified, **characterized in that** it includes:
- an input register (14) for periodically receiving addresses (Q) transmitted over the network by a master circuit (M) and frames (A) transmitted over the network as answers to these addresses;
- an event flag (18) set to a "question received" state at the time when an address is received in the input register;
- an output register (16) receiving the content of the transmission channel when the flag is in the "question received" state and the address contained in the input register is that of the transmission channel; and
- a trigger (22) for transmitting the content of the output register, armed when the flag is set to the "question received" state and the address contained in the input register is that of the transmission channel, this trigger being fired and reset by a new setting of the flag at the "question received" state.

4. A circuit for connection to a network, including at least one reception channel (R) associated with an address of a transmission channel (T), **characterized in that** it includes:
- an input register (14) for periodically receiving addresses (Q) transmitted over the network by a master circuit (M) and frames (A) transmitted over the network as answers to these addresses;
- the reception channel connected to the input register to receive the content of the input register when it is both selected and enabled;
- an event flag (18) set to a "question received" state at the time when an address is received in the input register, set to an "answer received" state at the time when a frame is received in the input register, and enabling the reception channel at the "answer received" state; and
- means (24) for preparing the selection of the reception channel when the event flag is set to the "question received" state and the address contained in the input register is that associated with the reception channel, and for selecting the reception channel upon the next setting of the flag to the "question received" state.

5. The circuit of claim 3 or 4, **characterized in that** it includes:
- a counter (20) set to a predetermined value upon each setting of the flag to the "question received" state; and
- means for causing the effects of a setting of the flag to the "question received" state when the flag is not set to that state at the time when the counter has counted down the predetermined value.

6. The circuit of claim 5, **characterized in that** the addresses are transmitted in frames also including the setting value of the counter (20).

7. The circuit of claim 5, **characterized in that** it includes a frame repeat flag set to a state authorizing address reception before the expiry of the down-counting of the counter (20), set to a state authorizing answer reception as soon as an address is received, and set to a state forbidding reception as soon as an answer is received.

8. A master circuit according to claim 3 or 4, **characterized in that** it includes:
- the flag (18) settable to a "question transmitted" state, this state having the same cause and the same effects as a "question received" state and, further, arming a second trigger (22) for enabling the output register (16) and causing the loading of an address to be transmitted in the output register; and
- a counter (20) setting the flag to a "period reached" state each time that it reaches a maximum value, this state firing the second trigger.

9. The master circuit of claim 8, **characterized in that** it includes:
- a buffer register (26) storing the address contained in the input register (14) when the flag is set to the "question transmitted" state;
- the output register (16) receiving the content of the transmission channel when the flag is set to the "period reached" state and the address contained in the buffer register is that of the transmission channel; and
- a third trigger (22) for enabling the output register, armed when the flag is set to the "period reached" state and the address contained in the buffer register is that of the transmission channel, and fired when the flag is set to the "question transmitted" state.
